Europäisches Patentamt

(19) European Patent Office

Office européen des brevets

(11) **EP 0 579 182 B1**

(12) **EUROPEAN PATENT SPECIFICATION**

(45) Date of publication and mention
of the grant of the patent:
**29.01.1997 Bulletin 1997/05**

(51) Int. Cl.$^6$: **B62D 33/06**, B60G 17/01,
B60G 25/00, F16F 15/00

(21) Application number: **93111223.9**

(22) Date of filing: **13.07.1993**

(54) **An active vehicle suspension, particularly a driver's cab suspension for a commercial vehicle**

Aktive Fahrzeugfederung, insbesondere Fahrerhausfederung eines Nutzfahrzeuges

Suspension active pour véhicule, en particulier une suspension de la cabine de conducteur d'un
véhicule utilitaire

(84) Designated Contracting States:
**DE ES FR GB IT NL SE**

(30) Priority: **14.07.1992 DE 4223037**

(43) Date of publication of application:
**19.01.1994 Bulletin 1994/03**

(73) Proprietor: **IVECO MAGIRUS AG**
**D-89079 Ulm (DE)**

(72) Inventor: **Wiesmeier, Albert**
**D-7901 Merklingen (DE)**

(74) Representative: **Boggio, Luigi et al**
**STUDIO TORTA Società Semplice**
**Via Viotti, 9**
**10121 Torino (IT)**

(56) References cited:
**EP-A- 0 027 869**          **EP-A- 0 239 831**
**EP-A- 0 265 911**          **EP-A- 0 270 893**
**EP-A- 0 275 664**          **EP-A- 0 412 853**
**WO-A-90/12700**          **US-A- 5 044 455**

Printed by Rank Xerox (UK) Business Services
2.13.13/3.4

**Description**

This invention relates to an active vehicle suspension, particularly a suspension for the driver's cab of a commercial vehicle, for reducing vertical disturbances when the vehicle travels over uneven regions of roadways, according to the preamble of claim 1.

According to the preamble of claim 1, US-A-5 044 455 discloses an actively controlled truck cab suspension in which the spring displacement is controlled by an actuator. The dynamic time response of the lower support point of the actuator is taken into account by means of at least the first derivative of the vertical displacement of the lower support point.

It is known that conventional, i.e. passive, suspension systems constitute a compromise, which is invariable with respect to time, between requirements which are at least partially in opposition to each other. In certain travel situations in which changing requirements come to the fore, such systems do not therefore make full use of the performance parameters which are physically possible.

New developments in microelectronics and hydraulics enable active systems to be produced in which power is provided appropriate to the situation, i.e. in real time, from an additional source (generally a motor-drive hydraulic pump) for reducing vertical disturbances.

A common feature of all known active suspension systems is that they obtain information on the state of motion from acceleration signals or from force signals which are physically equivalent thereto. The basis for this rests on the fact that, on the one hand the effect of road unevenness on the vehicle, its occupants and if applicable the load manifests itself as an acceleration, and on the other hand the measurement of the acceleration provides the relevant information directly and in a contactless manner. The suspension proposed here calculates the vertical displacement (the height) in the inertial system of the earth's surface from this by double integration.

A control system for a vehicle suspension which was only based on the acceleration measured in the vehicle would be faced with the difficulty that the state of motion is undefined with respect to the absolute height and the vertical velocity, and the control system would attempt to maintain the initial values arising by chance and would not react to corresponding disturbances. It would thus not be stable in relation to zero point displacements.

Similar considerations apply to vehicle suspension control systems which are only based on the vertical velocity. For systems such as these, a jolt in the steering (a sudden turn of the steering wheel) for example, followed by a slow turning back, results in a one-sided displacement of the zero point. Control systems such as these for vehicle suspensions therefore also necessitate the determination of the rate of yaw (the rotational speed of the vehicle about the vertical axis).

As far as is known, only the Lotus company has hitherto developed a fully-active suspension. This is disclosed in PCT Application WO 90/12700 and relates to a vehicle suspension of the type cited initially, in which a hydraulic control cylinder which is controlled by a control system is provided as the actuating element of variable length parallel to the vehicle suspension spring. The vehicle suspension spring and the hydraulic control cylinder are secured between the frame of a private car and the vehicle wheel hub arrangement. The object of this known active vehicle suspension is to "press" the vehicle wheels of a private car travelling on an uneven road into the hollows in the road, for the purpose of creating better adhesion to the ground. This complete active vehicle suspension is very expensive and cost-intensive to produce, particularly with regard to the hydraulics used.

Other companies have developed so-called semi-active or merely adaptive systems, each of which merely acts on shock absorbers. The essential control parameter is therefore the instantaneous (for semi-active systems) or time-averaged (for adaptive systems) spring deflection. These systems are not the subject of this invention.

The Lotus development constitutes an active vehicle suspension for a private car which is primarily directed towards ensuring the optimum adhesion of the vehicle to the ground, even at high speeds. In contrast, the aim of driver's cab active suspensions for commercial vehicles is to improve the level of driver comfort in the driver's cab, which implies a decrease in vertical vibrations in real time. This can be achieved by superimposing an opposing motion of the driver's cab suspension on the vertical motion of the frame, so that the sum of the two motions remains constant.

If this compensation relates to the displacement only, the driver's cab position is also stabilised with respect to pitching and rolling at the same time. A double integration is required in order to determine the displacement from the measured acceleration. This leads to various problems, particularly if the calculation is performed in a computer with a finite scanning time. Practicable proposed solutions to this problem have not been disclosed in the prior art.

The object of the invention is to create an active vehicle suspension of the type cited initially, which is of simple construction and which enables the level of driver comfort to be improved by means of a very simple control system for an active vehicle or driver's cab suspension.

This object which underlies the invention is achieved by means of the features cited in the characterising clause of claim 1.

The subject of the invention is advantageously developed further by means of the features of subsidiary claims 2 to 4.

The essence of the invention is to employ the vertical displacement of the lower support point of the actuating elez-

ment or elements, which is determined from the acceleration signal by double integration, as the primary control variable, taking the dynamic time response into account by means of a time-synchronous state vector which comprises at least the single-differentiated portion, i.e. the vertical velocity, in addition to the displacement. The active vehicle or driver's cab suspension is based on a comparison of the frame displacement (standard variable) calculated from the frame acceleration with the relative displacement of the piston rod of the variable-length actuating element as the feedback variable.

According to the invention, stability is achieved with respect to zero point displacements in a real active suspension system.

Differential functions are also included in the control signal to take into account unavoidable delay times.

The invention employs progressive control principles which are based on the state vector, i.e. on a set of physical quantities and their derivatives which describe the dynamic state of the system.

The success of a suspension control system strongly depends upon feeding in the compensating signal at the same time as the disturbance. However, frequency-dependent phase shifts arise on numeric integration and filtering, and are different for each variable which is differentiated with respect to time.

The invention is described below in more detail with reference to the drawings, where:

Figure 1             illustrates an electronic control system for a driver's cab active suspension;

Figures 2 to 7       illustrate the effect of the start time on the analytical and numerical integration, for an example which is realistic in terms of frequency and scanning step width;

Figures 8 to 10      illustrate the additional effect of a sensor offset;

Figures 11 to 13     illustrate the effect of high-pass filtering in the time domain; and

Figures 14 and 15    illustrate the amplitude response and phase response, respectively, in the frequency domain.

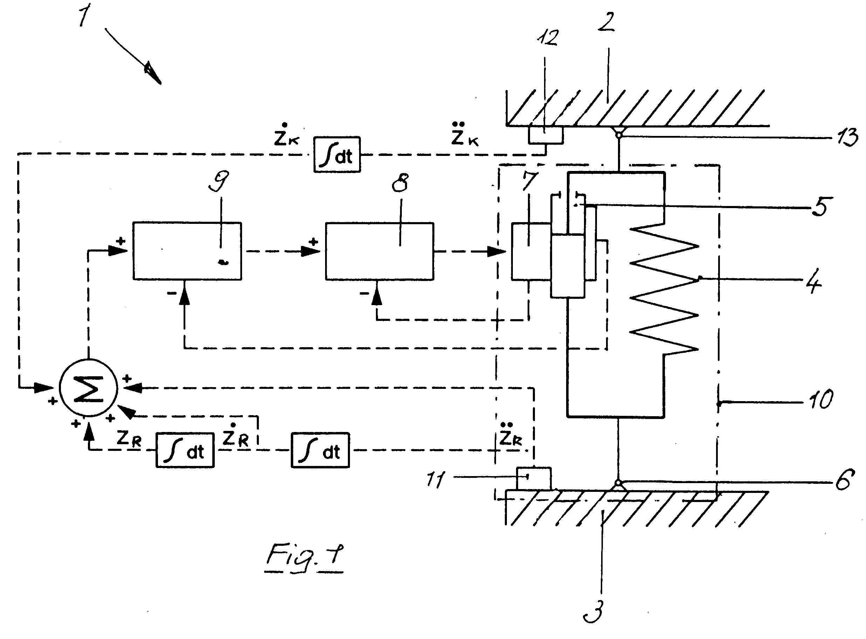

The electronic control system for an active vehicle suspension (1) illustrated in Figure 1 is designed for a driver's cab suspension located between a driver's cab (2) and a vehicle frame (3). For the sake of clarity, only one suspension element (10) is illustrated. An actuating element (5) of variable length, in the form of a hydraulic control cylinder, is provided near the driver's cab suspension spring (4) and parallel thereto, and is linked between the driver's cab (2) and the vehicle frame (3). The hydraulic cylinder is operated by a control system comprising a control valve (7), a valve controller (8) and a cylinder controller (9). The suspension element (10) thus comprises the driver's cab suspension spring (4) and the actuating element (5) together with the upper and lower support points (13, 6) and the control valve (7).

In order to control the active vehicle suspension (1), the spring displacement is employed as the controlled element. The disturbance variable is not the vertical acceleration or the vertical velocity; instead the vertical displacement ($z_R$) of the lower support point (6) of the hydraulic control cylinder on the vehicle frame (3), i.e. the vertical displacement of the support point of the active sprung mass, is used as the primary control variable. This vertical displacement ($z_R$) is obtained by double integration from the acceleration signal ($\ddot{z}_R$) (frame acceleration). A dynamic time response is taken into account by means of a time-synchronous state vector, which also comprises at least the single-differentiated portion of the vertical velocity ($\dot{z}_R$) in addition to the displacement ($z_R$). The control signal in the computer ($\Sigma$) shown in Figure 1 is therefore calculated from the frame acceleration, its first integral (velocity) and its second integral (displacement), and from the cab acceleration and its first integral (corresponding to the sky-hook principle). (The term "sky-hook principle" means that a simulation is effected, representing the suspension of the chassis or the driver's cab in the sky (i.e. on a running rail) by means of a shock absorber. The resistance of a shock absorber is proportional to the velocity with which it is compressed or extended). The feedback of the vertical driver's cab velocity, which is to be made equal to zero, completes the control circuit for the driver's cab active suspension (1).

Due to the finite signal transit time and the inertia of the masses in movement, which inertia also restricts the possible acceleration if the forces are limited, the motion of the variable-length actuating element (5) (also termed "actuators", e.g. hydraulic cylinders, linear drive units) does not follow the full extent of the control signal, and then only with a certain delay (amplitude response and phase response). It is therefore necessary to increase the control signal in relation to the standard signal and to bring it forward in time. Both the amplitude response and the phase response are frequency-dependent.

Real control systems can frequently be approximated in terms of linear behaviour. Such a system may then be represented by a polynomial of the frequency variables $\omega = 2\pi f$. If use is made of the fact that differentiation of trigonometric functions leads firstly to a phase lead of 90° and secondly to a multiplication by $\omega$, the requisite control signal may be determined by means of a differential operator which acts on the time-dependent standard. For $PT_2$ behaviour this is a second order differential operator, for example.

For example, if it is assumed that the active suspension system corresponds to $PT_2$ behaviour, then the vertical velocity and the vertical acceleration must also be taken into account in addition to the displacement. These variables then constitute the state vector.

Since in the present case the acceleration is provided as the signal, the other variables are calculated from it by single or double integration. In numerical integration employing finite time steps the instantaneous value of the function is multiplied by the time interval between two steps and added to the preceding value. The time interval is symmetrical about the time of scanning and thus half is in the past and half is in the future. Numerical integration therefore constitutes a forecast of the value of the integral. Whereas analytical integration comprises a limiting process to form infinitely narrow step widths, this is not possible in a computer using digital processing. A comparison of the integral determined numerically with an integral calculated analytically therefore results in a forward displacement in time by half a step width (conversely, numerical differentiation leads to a lag by the same amount compared with the analytical function).

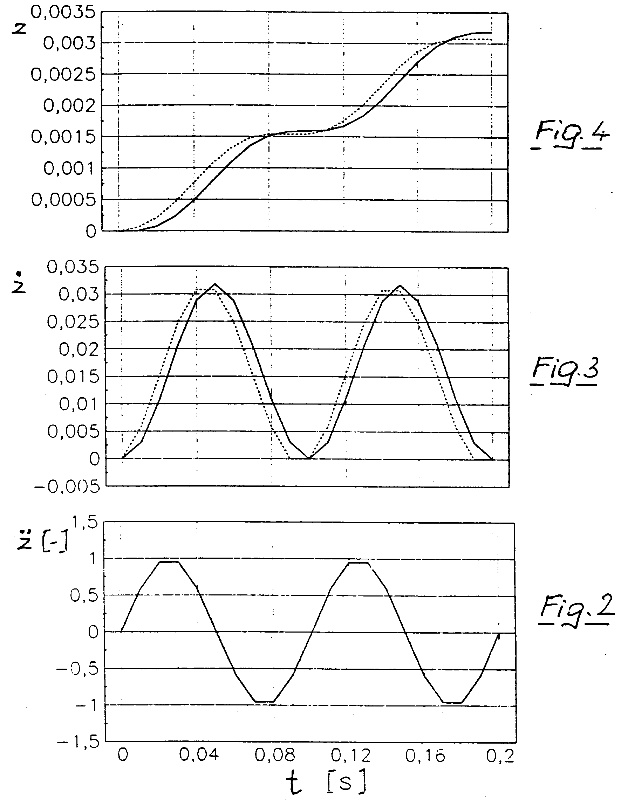

This is equivalent to a phase shift, which in turn places a greater restriction on the control performance obtainable in the best case the nearer the desired control frequency approaches the scanning rate of the digital control system. With double integration it amounts to a complete scanning step, and corresponds to 36°, for example, at a scanning rate of 100 Hz and a control frequency of 10 Hz (see Figures 2 to 7). The following equation is generally valid for an integration:

$$\delta = 360° . f/2f_a$$

where

$\delta$        is the phase lead
f        is the scanning rate, and
f        is the control frequency.

On account of this additional phase shift, which arises due to the numerical integration, it is no longer possible to compensate for the amplitude response and the phase response of the linear control system at <u>all</u> frequencies.

It is therefore proposed that a time-synchronous calculation is performed of the correction vector, which corresponds to the inverted state vector, by extrapolating the differential variations over time into the future, and that in contrast the integral variations over time are back-calculated into the past.

In this respect the simplest procedure is to back-calculate all the integral variations over time into the past until they are isochronous with the differential progression of the highest order. However, this brings the disadvantage that an additional dead time arises in the control circuit, which has a disadvantageous effect on control performance.

Conversely, it is possible to extrapolate all the differential variations over time into the future until they are isochronous with the highest order integral variation over time. However, linear extrapolation results in the following error for the frequency f, the step width $\Delta t$ and the n-fold integration:

$$\Delta y = 2(1 - \sin\pi(1 - n.\Delta t.f) = 4 \sin^2(\pi.\Delta t.f.n/2)$$

where

$\Delta y$        is the extrapolation error
$\Delta t$        is the step width
f        is the frequency, and
n        is the integration stage (order of integration).

If it is assumed that the step width $\Delta t$ of the digital control system is about 10 times smaller than the cycle length of the frequency f concerned, the above sine function may still be treated as linear, and the following equation is valid:

$$\Delta y = 4 (\pi.\Delta t.f.n/2)^2$$

This means that the extrapolation error $\Delta y$ increases with the square of the scanning step width $\Delta t$, the frequency f or the integration stage n.

Synchronisation is therefore selected at the time at which firstly the dead time and secondly the extrapolation error do not become too large. For a two-stage integration this is given by the mean position, i.e. of the first-stage integration which corresponds to the vertical velocity, at which on the one hand the values of the double integration (e.g. the displacement) are back-calculated by half a stage i.e. by half a step width, and on the other hand the output values (acceleration) are extrapolated by half a stage or by half a step width.

The extrapolation error $\Delta y$ may be reduced even further by employing a quadratic extrapolation instead of a linear extrapolation. For a complete step width (corresponding to the phase shift of a double integration) this amounts to:

$$z_{n+1} = z_{n-2} - 3.z_{n-1} + 3.z_n$$

where

$z_{n+1}$ = the extrapolated value

$z_n$ = the last measured value

$z_{n-1}$ = the penultimate measured value

$z_{n-2}$ = the value preceding the penultimate measured value.

Since in this case extrapolation is only effected at the mean position (corresponding to a single integration), the following equation is valid:

$$z_{n+1} = (3.z_{n-2} - 10.z_{n-1} + 7.z_n)/8$$

The time-synchronous calculation of integral quantities (displacement, velocity) is thus ensured and consequently the additional phase shift due to the method of calculation is eliminated. However, the use of the vertical displacement (z) of the vehicle frame (3) is associated with a further difficulty, namely that two integration constants, corresponding to the initial position and the initial velocity, have to be determined in a double integration. For fundamental physical reasons these values cannot be derived from the acceleration signal, and lead to one error which is constant with time and one error which is proportional to time. In addition there is a sensor offset, which as a rule is unavoidable, and unavoidable errors in the calculation which are due to the integration procedure using a finite step width or to the above-mentioned extrapolation errors $\Delta y$.

The object of the active suspension is not to maintain the driver's cab (2) at an absolute position, i.e. at a constant height with respect to the centre of the earth. This would lead to difficulties when travelling over relatively shallow undulations or hills in the road. Instead - as described in the introduction, the driver's cab active suspension (1) must be designed in terms of its control technology so that the actuators or the variable-length actuating elements (5) return to the mean position as rapidly as possible after a disturbance, i.e. only short-term disturbances should be compensated for, whilst long-term trends, corresponding to a journey uphill for example, are not taken into account. This is achieved by filtering off the constant portion of the signal in each case by means of a high-pass filter. It follows from the corresponding filter theory that in the present case, comprising the double integration of a signal falsified by a constant offset, at least a third order high-pass filter must be used. The cut-off frequency of the high-pass filter determines the frequency below which the disturbances are ignored or above which they are taken into account. The higher this is set, the more rapidly the disturbance signal, and thus the control system, returns to the zero position (= the mean position). (The time required for this is termed the transition period). However, a difficulty stands in the way of this desired behaviour, namely that each filter causes a phase angle rotation, which in the present case corresponds to a phase lead of 3 times 45°. This effect in turn prevents the vertical motion of the frame from being accurately compensated for, because the information which is necessary for this purpose is not available in a phase-synchronised form.

One solution is to set the cut-off frequency very much lower than the value corresponding to the object of a rapid return to the mean position. However, there are situations in which rapid recovery is the primary object and those in which high accuracy is the primary object. A solution is therefore proposed comprising a variable cut-off frequency, the value of which is varied according to certain criteria. In this respect it must be ensured that the cut-off frequency is not varied in sudden jumps but in the smallest possible steps, since a change in cut-off frequency has the same effect as an additional sudden disturbance on the calculation procedure employed.

The following criteria are seen as important:

1. The time of switch-on: sensor offset and "erroneous" predetermination of the integration constants act like a sudden sharp disturbance (comparable with a kerb) at the time of switch-on. This must be suppressed as effectively as possible by means of a short recovery time. A high initial cut-off frequency with a decreasing tendency is therefore necessary.

2. Slight disturbances on good roads: compensation which is as accurate as possible must be aimed at here, so that an effective increase in comfort can still be obtained. This is achieved using a lower cut-off frequency. The criterion is the mean square deviation of the vertical frame accelerations or displacements (the lower frequency components are accentuated when the vertical frame displacements are employed).

3. Singular events, i.e. travelling over humps or potholes: the primary consideration here is again to suppress the disturbance as effectively as possible, because otherwise the hydraulic cylinders will strike their stops. When approaching the end position it is therefore necessary to raise the cut-off frequency. The criterion here is the distance to the mean position.

The unbroken line shown in Figure 2 represents the variation of the acceleration over time, which is assumed to be sinusoidal, as it would be stored in the computer at a vibration frequency of 10 Hz and a sensing rate of 100 Hz (ordinate = acceleration; abscissa = time t) .

The unbroken line in Figure 3 illustrates the first analytical integration, and the dotted line illustrates the first numerical integration, at the same sensing rate as in Figure 2 (ordinate = velocity; abscissa = time t) .

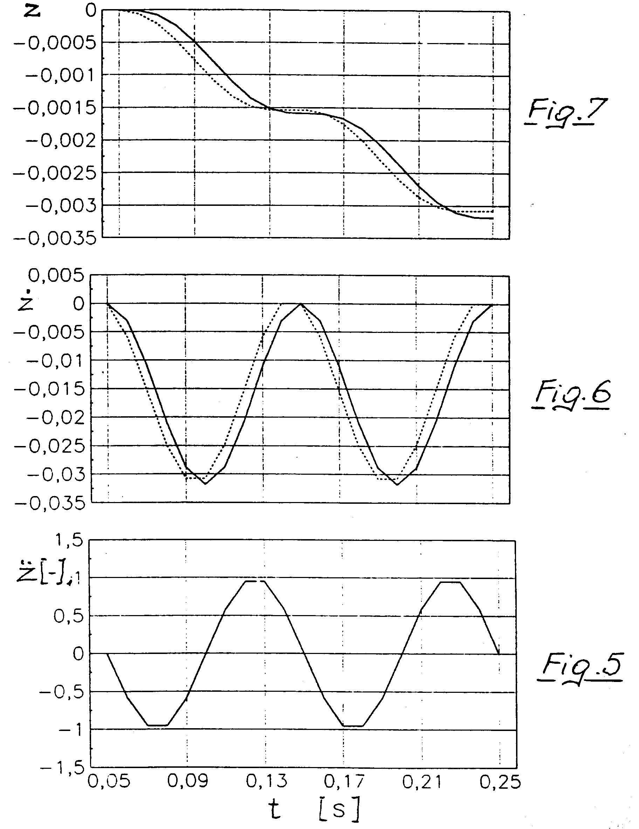

The unbroken line in Figure 4 illustrates the second analytical integration, and the dotted line illustrates the second numerical integration (ordinate = displacement; abscissa = time t in seconds) .

In analytical integration (indefinite integral) the integration constant C occurs as an arbitrary parameter:

$$Y(t) = \int y(t) \, dt + C$$

It cannot be determined by calculation, but must be determined by the initial conditions.

In numerical integration (which necessarily produces a definite integral), this integration constant C is given by the value of the integral at the start of integration, normally $t_0 = 0$.

$$Y(t) = \int_0^t (\tau) \, d\tau = y(t) - Y(0) = \int y(t) - Y(t{=}0)$$

(Y is the integral, y is the variable to be integrated, and $\tau$ is the integration variable, which is replaced by the limits 0 and t after performing the integration).

Figures 2 to 7 illustrate the fundamental effect of the selection of the start of integration on the result of integrating a sine function.

Figures 5, 6 and 7 correspond to Figures 2, 3 and 4, respectively, where Figure 7 relates to the second integration stage of the original shown in Figure 5, and Figure 6 relates to the first integration stage of the original shown in Figure 5.

The start of the integration in Figures 2 to 4 is selected as $t_0 = 0$, with the result that $Y(0) = \cos (0) = 1.0$ . In Figures 5 to 7 the start is selected as $t_0 = \pi$ , with the result that $Y(0) = \cos (\pi) = -1.0$ , so that the first integral shown in Figure 3 is displaced upwards by 1.0, whereas the first integral shown in Figure 6 is displaced downwards by - 1.0.

In the next integration stage the displacement acts as a continuously increasing or decreasing function, corresponding to the equation:

$$\int (Y(t) - Y(0)) = \int Y(t) - t . Y(0)$$

Moreover the phase lead caused by the numerical integration can clearly be seen.

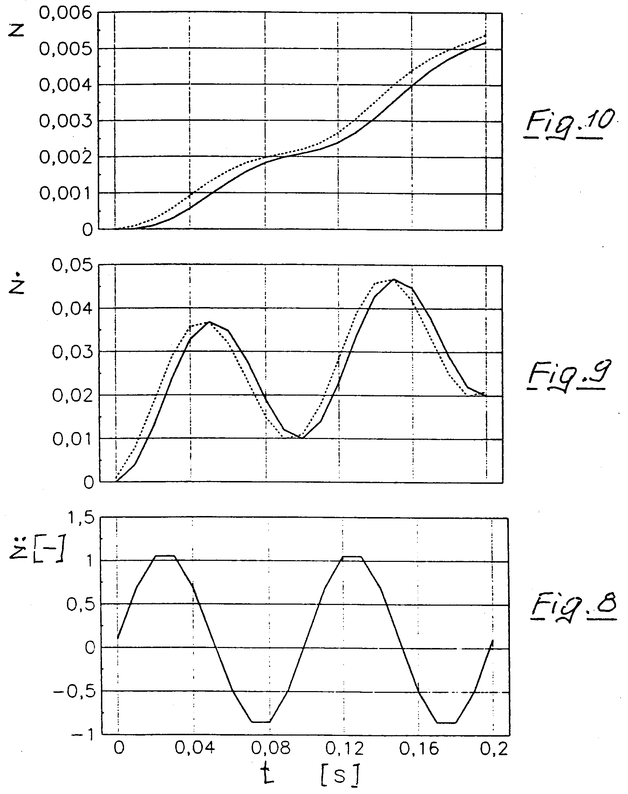

Figures 8 to 10 illustrate the additional effect of an offset, with Figures 8, 9 and 10 corresponding to Figures 2, 3 and 4, respectively.

Even for the first integration shown in Figure 9, it can clearly be seen that the offset produces an unrestricted linear ascent, wherein the values of the amplitudes of the modulation are very low. The conditions pertaining to the second integration shown in Figure 8 *[sic]* are even more obvious: here the "smearing effect" due to the method of calculation broadly overlaps the wanted signal (the sinusoidal modulation). The sharp reduction in amplitude is due to the low-pass effect which is associated with the integration:

$$\int \sin(\omega t) \, dt = - (\cos (\omega t)) \, / \, \omega$$

i.e. the high frequencies ($\omega$ is large) are more strongly damped than the low frequencies.

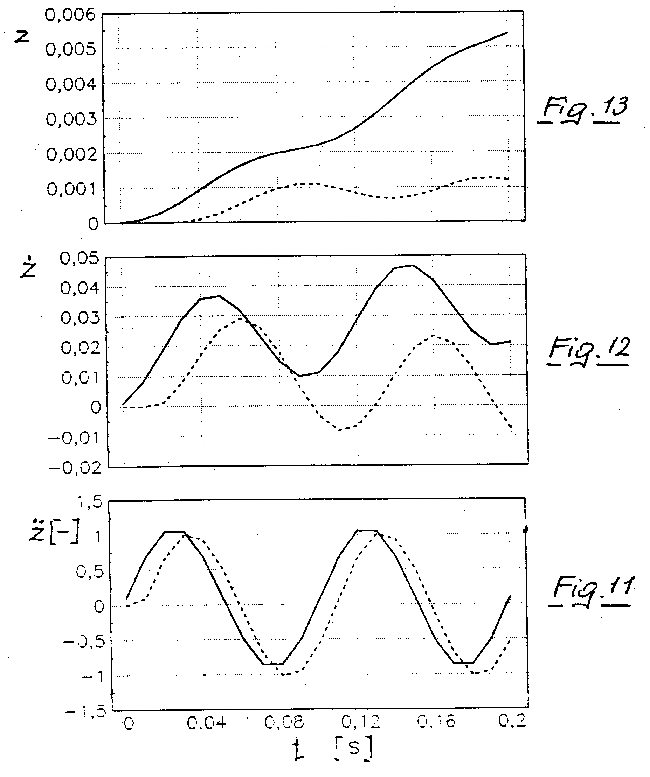

Figures 11, 12 and 13 illustrate the effect of high-pass filtering at a cut-off frequency of 1 Hz on a sinusoidal vibration of 10 Hz with 10% offset; the unfiltered curve is shown as a continuous line, and the filtered curve is shown as a dotted line.

The offset in the output curve of the original shown in Figure 11 is removed by filtering: the dotted curve is disposed symmetrically in relation to the zero line.

The same effect is observed for the first integration shown in Figure 12, where the linear ascent is substantially eliminated by filtering, whilst for the second integration shown in Figure 13 the stabilising effect is not yet complete. The filter requires a longer recovery time than that which could be illustrated.

However, it can clearly be seen that the filtered curve represented as the dotted line lags behind the unfiltered curve represented as the continuous line. This is the so-called phase shift, and is frequency-dependent for frequency filtering (in contrast to the phase lead in numerical integration, which is exactly half the width of an integration step for an integration, and is independent of the frequency at which the signal under test oscillates).

This situation depends on the ratio of the frequency of oscillation of the signal under test to the cut-off frequency of the filter. As already stated, the cut-off frequency $f_e$ of the filter is that above which the high-pass filter allows signal components to pass, and below which they are damped and finally completely blocked.

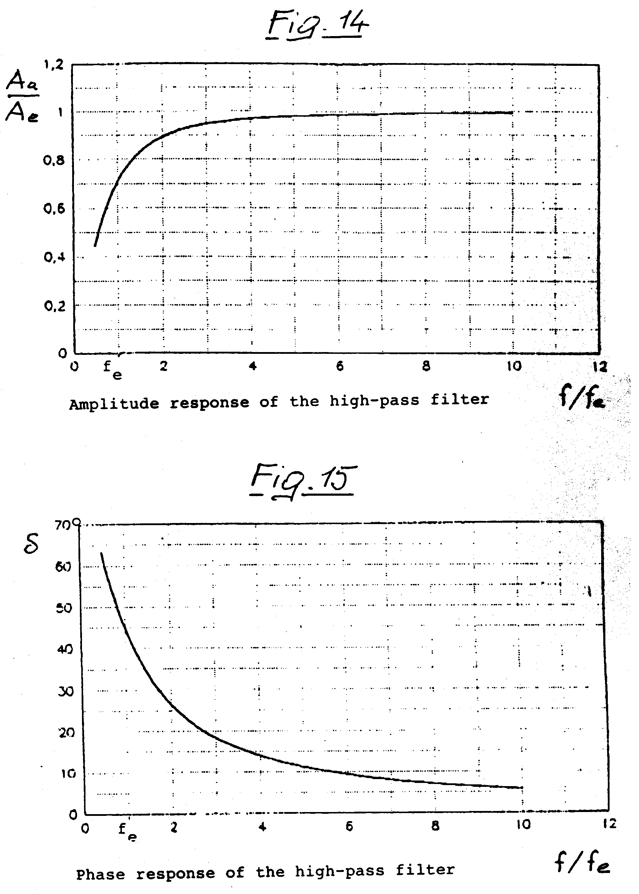

Therefore, in addition to the amplitude response, Figures 14 and 15 also illustrate the phase shift of the numerical high-pass filter sT/(1 + sT).(abscissa = frequency ratio ($f/f_e$); ordinate = amplitude ratio (Figure 14) or phase shift (Figure 15)).

## Claims

1. An active vehicle suspension (1), particularly a driver's cab suspension (1) of a commercial vehicle, for reducing vertical disturbances when the vehicle travels over uneven regions of roadways, with actuating elements (5) of variable length parallel to the driver's cab suspension springs (4) for controlling the spring displacement by means of a control system, the control system taking the dynamic time response of the lower support point (6) of the actuating elements (5) into account by means of at least the first derivative ($\dot{z}_R$) of the vertical displacement ($z_R$) of the lower support point (6), **characterized** in that the vertical displacement ($z_R$) of the lower point (6) of the actuating element or elements (5), which is determined from the acceleration signal ($\ddot{z}_R$) by double integration, is employed as control variable, and that the dynamic time response of the lower support point (6) is taken into account by means of numerically calculated time-synchronized components of the state vector comprising at least the first derivative ($\dot{z}_R$) of the vertical displacement ($z_R$) of the lower support point (6) in addition to the vertical displacement ($z_R$) itself.

2. A vehicle suspension according to claim 1, characterized in that the calculation of the time-synchronous state vector is effected partly by extrapolation of the variation over time of the differentiated variables, and partly by back-calculation of the integrated variables.

3. A vehicle suspension according to claim 1 or 2, characterized in that extrapolation of the differentiated variables is effected by quadratic extrapolation.

4. A vehicle suspension according to any one of claims 1 to 3, characterised in that errors of measurement (offsets), integration constants which are arbitrary and which are thus mostly erroneously predetermined, and severe disturbances which exceed the range of adjustment, are taken into account by means of a high-pass filter with a variable cut-off frequency.

## Patentansprüche

1. Aktive Fahrzeugaufhängung (1), insbesondere Fahrerkabinen-Aufhängung (1), eines Nutzfahrzeugs, zur Reduzierung senkrechter Störungen beim Fahren des Fahrzeugs über Fahrbahnunebenheiten, mit in ihrer Länge veränderbaren Betätigungselementen (5) parallel zu den Fahrerkabinen-Aufhängungsfedern (4) zur Steuerung des Federweges mit Hilfe eines Steuersystems, welches Steuersystem das dynamische Zeitverhalten des unteren Abstützpunktes (6) der Betätigungselemente mit wenigstens der ersten Ableitung ($\dot{z}_R$) der vertikalen Bewegung ($z_R$) des unteren Abstützpunktes (6) berücksichtigt, dadurch **gekennzeichnet**, daß die vertikale Bewegung ($z_R$) des unteren Punktes (6) des Betätigungselements oder der Elemente (5), das ermittelt wird durch doppelte Integration des Beschleunigungssignals ($\ddot{z}_R$), verwendet wird als Steuervariable, und daß das dynamische Zeitverhalten des unteren Abstützpunktes (6) berücksichtigt wird durch numerisch berechnete, zeitsynchrone Komponenten des Zustandsvektors aus wenigstens der ersten Ableitung ($\dot{z}_R$) der vertikalen Bewegung ($z_R$) des unteren Abstützpunktes (6) sowie der senkrechten Bewegung ($z_R$) selbst.

2. Fahrzeugaufhängung nach Anspruch 1, dadurch **gekennzeichnet**, daß die Berechnung des zeitsynchronen Zustandsvektors teilweise durch Extrapolation der Veränderung der differenzierten Größen mit der Zeit, teilweise durch Rückberechnung der integrierten Variablen erfolgt.

3. Fahrzeugaufhängung nach Anspruch 1 oder 2, dadurch **gekennzeichnet**, daß die Extrapolation der differenzierten Variablen bewirkt wird durch quadratische Extrapolation.

4. Fahrzeugaufhängung nach einem der Ansprüche 1 bis 3, dadurch **gekennzeichnet**, daß die Berücksichtigung von Meßfehlern (Offsets) willkürlichen und zumeist falsch gewählten Integrationskonstanten und schweren Störungen, die den Einstellbereich überschreiten, berücksichtigt werden mit Hilfe eines Hochpaßfilters mit variabler Eckfrequenz.

**Revendications**

1. Suspension active (1) pour véhicule, telle qu'en particulier une suspension (1) de la cabine de conducteur d'un véhicule utilitaire, permettant de réduire les perturbations verticales lorsque le véhicule roule sur des zones de routes irrégulières, avec des éléments d'actionnement (5) de longueur variable parallèles aux ressorts (4) de la suspension de la cabine de conducteur, de manière à commander le déplacement des ressorts au moyen d'un système de commande, le système de commande prenant en compte la réponse temporelle dynamique du point de support inférieur (6) des éléments d'actionnement (5), en utilisant au moins la dérivée première ($\dot{z}_R$) du déplacement vertical ($z_R$) point de support inférieur (6),
caractérisée en ce que
le déplacement vertical ($z_R$) du point inférieur (6) de l'élément ou des éléments d'actionnement (5), qui est déterminé à partir du signal d'accélération ($\ddot{z}_R$) par double intégration, est utilisé comme variable de commande, et en ce que la réponse temporelle dynamique du point de support inférieur (6) est prise en compte au moyen de composantes synchronisées dans le temps et calculées numériquement, du vecteur d'état, ces composantes comprenant au moins la dérivée première ($\dot{z}_R$) du déplacement vertical ($z_R$) du point de support inférieur (6), en plus du déplacement vertical ($z_R$) lui-même.

2. Suspension pour véhicule selon la revendication 1,
caractérisée en ce que
le calcul du vecteur d'état synchronisé en temps est effectué partiellement par extrapolation de la variation au cours du temps des variables différenciées, et partiellement par rétro-calcul des variables intégrées.

3. Suspension pour véhicule selon la revendication 1 ou la revendication 2,
caractérisée en ce que
l'extrapolation des variables différenciées est effectuée par extrapolation quadratique.

4. Suspension pour véhicule selon l'une quelconque des revendications 1 à 3,
caractérisée en ce que
des erreurs de mesure (décalages), des constantes d'intégration qui sont arbitraires et sont donc la plupart du temps prédéterminées de manière erronée, et des perturbations importantes dépassant la plage de réglage, sont prises en compte au moyen d'un filtre passe-haut ayant une fréquence de coupure variable.

Fig. 1

_Fig. 4_

_Fig. 3_

_Fig. 2_

Fig.7

Fig.6

Fig.5

Fig.10

Fig.9

Fig.8

Fig. 13

Fig. 12

Fig. 11

## Fig. 14

Amplitude response of the high-pass filter

## Fig. 15

Phase response of the high-pass filter